# EUROPEAN PATENT APPLICATION

(11) **EP 4 620 804 A1**
(43) Date of publication of application: **24.09.2025**
(21) Application number: 22970024.0
(22) Date of filing: 27.12.2022
(51) Int. Cl.: B64C 13/18, B64C 13/20, B64D 45/00, B64U 10/14

(54) **UNMANNED AERIAL VEHICLE, UNMANNED AERIAL VEHICLE CONTROL SYSTEM, AND UNMANNED AERIAL VEHICLE CONTROL METHOD**

(71) Applicant: Kubota Corporation, Osaka 556-8601 (JP)
(72) Inventor: SEINO, Kohei, Sakai-shi, Osaka 590-0908 (JP)
(74) Representative: Cabinet Beau de Loménie
(86) International application number: PCT/JP2022/048162
(87) International publication number: WO 2024/142230

(57) **Abstract**

A control device for a multicopter has an obstacle avoidance function to detect an obstacle based on a signal output from the obstacle sensor and to perform operations to avoid collision with the obstacle. The control device disables the obstacle avoidance function when a predetermined condition is satisfied, and enables the obstacle avoidance function when the predetermined condition is not satisfied. The predetermined condition includes at least one of: a first condition that a tilt angle of the body is greater than a predetermined angle; a second condition that the unmanned aerial vehicle is in a takeoff operation or a landing operation; or a third condition that an altitude of the body is at or below a predetermined height.

## Description

### TECHNICAL FIELD

The present disclosure relates to unmanned aerial vehicles, and control systems and control methods for unmanned aerial vehicles.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (Multi-Rotor UAV) is also called a "drone", "multirotor", or "multicopter", and is widely used for applications including aerial photography, surveying, logistics, and agricultural spraying.

Many unmanned aerial vehicles used for industrial applications such as agriculture have obstacle detection functions. Such unmanned aerial vehicles perform operations to avoid collisions when obstacles are detected. Patent Document 1 discloses an example of an unmanned aerial vehicle with obstacle detection function.

### CITATION LIST

### PATENT LITERATURE

International Publication No. WO 2020/162586

### SUMMARY OF INVENTION

### TECHNICAL PROBLEM

In unmanned aerial vehicles with functions to detect and avoid obstacles, the collision avoidance function may unnecessarily restrict the flight of the unmanned aerial vehicle depending on the situation.

The present disclosure provides a control technology to suppress the unnecessary restriction of unmanned aerial vehicle flight by the collision avoidance function.

### SOLUTION TO PROBLEM

In an exemplary and non-limiting embodiment, a control device of an unmanned aerial vehicle of the present disclosure includes a body, an obstacle sensor attached to the body, and a control device. The control device has an obstacle avoidance function to detect an obstacle based on a signal output from the obstacle sensor and to perform an operation to avoid collision with the obstacle. The control device is configured to disable the obstacle avoidance function when a predetermined condition is satisfied, and enable the obstacle avoidance function when the predetermined condition is not satisfied. The predetermined condition includes at least one of: a first condition that a tilt angle of the body is greater than a predetermined angle; a second condition that the unmanned aerial vehicle is in a takeoff operation or a landing operation; or a third condition that an altitude of the body is at or below a predetermined height.

### ADVANTAGEOUS EFFECTS OF INVENTION

According to the embodiment of the present disclosure, it is possible to suppress unnecessary restriction of unmanned aerial vehicle flight by the collision avoidance function.

### BRIEF DESCRIPTION OF DRAWINGS

FIG. **1A** is a block diagram schematically showing several examples of rotation drive devices for rotating rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid drive type multicopter.
FIG. **2C** is a block diagram showing a basic configuration example of a parallel hybrid drive type multicopter.
FIG. **3** is a block diagram schematically showing a configuration example of a multicopter with obstacle avoidance function.
FIG. **4** is a side view schematically showing an example of a multicopter equipped with an obstacle sensor.
FIG. **5** is a diagram schematically showing the operation of a multicopter **10** detecting an obstacle **92** during flight. In the example of FIG. **5****,** the multicopter **10** is flying in the direction of the white arrow, and there is an obstacle **92** (in this case, a tree) in front of the multicopter **10.**
FIG. **6** is a diagram explaining obstacle detection when the multicopter is tilted.
FIG. **7** is a flowchart showing an example of operations performed by the control device.
FIG. **8** is a flowchart showing another example of operations performed by the control device.
FIG. **9** is a flowchart showing yet another example of operations performed by the control device.
FIG. **10** is a diagram schematically showing an example of a method for determining the altitude of the body.
FIG. **11** is a block diagram showing an example of the hardware configuration of the control device.
FIG. **12** is a schematic diagram showing a configuration example of a system including the multicopter.

### DESCRIPTION OF EMBODIMENTS

An unmanned aerial vehicle equipped with a plurality of rotors includes a rotation drive device that rotates the rotors (hereinafter referred to as "propellers"). Hereinafter, such an unmanned aerial vehicle is referred to as a "multicopter".

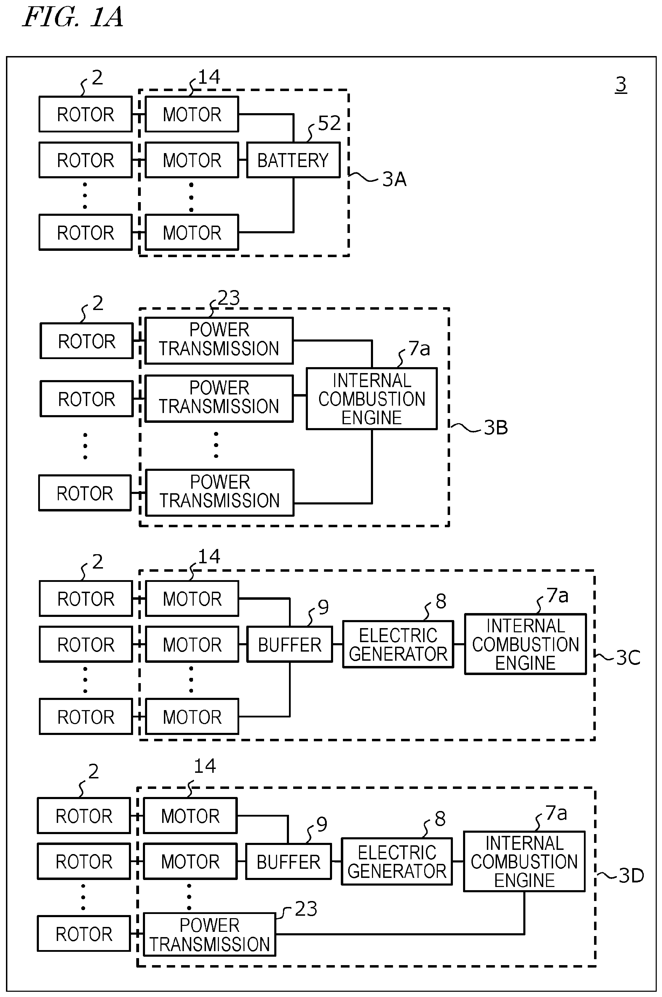

The configuration of rotation drive devices equipped in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines. Additionally, the number of internal combustion engines **7a** included in rotation drive device **3B** is not limited to one.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

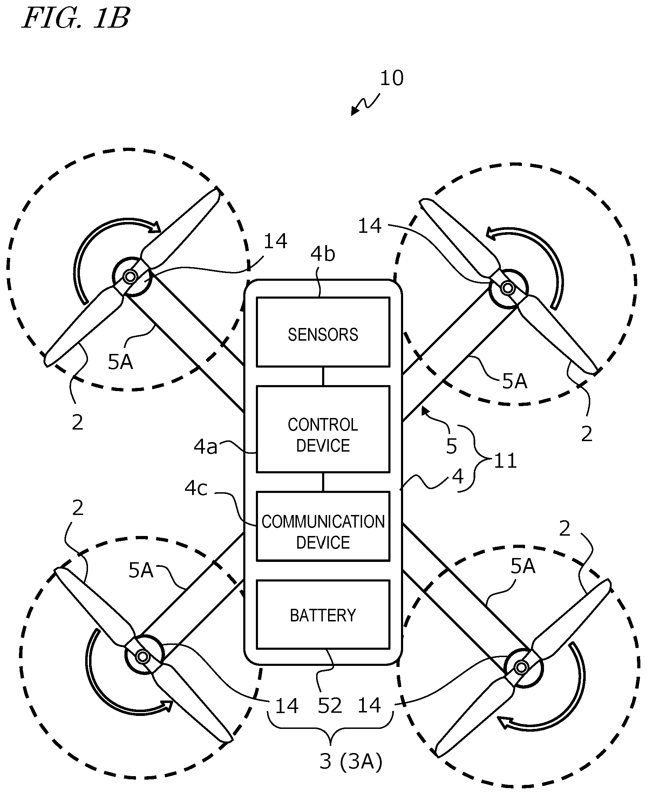

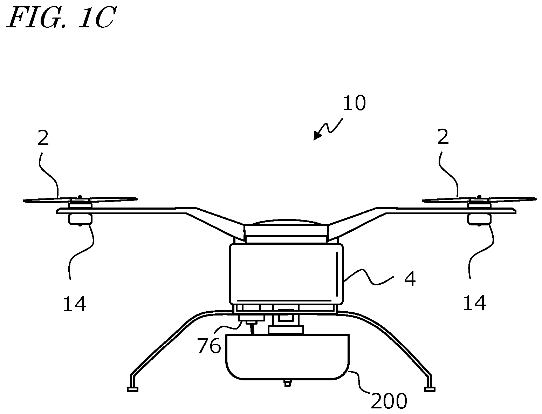

FIG. **1B** is a plan view schematically showing a basic configuration example of multicopter **10.** In the configuration example of FIG. **1B****,** a rotation drive device **3** is equipped with the first rotation drive device **3A** shown in FIG. **1A****.** That is, in this example, rotation drive device **3 (3A)** includes motors **14** and a battery **52.** FIG. **1C** is a side view schematically showing the multicopter **10.**

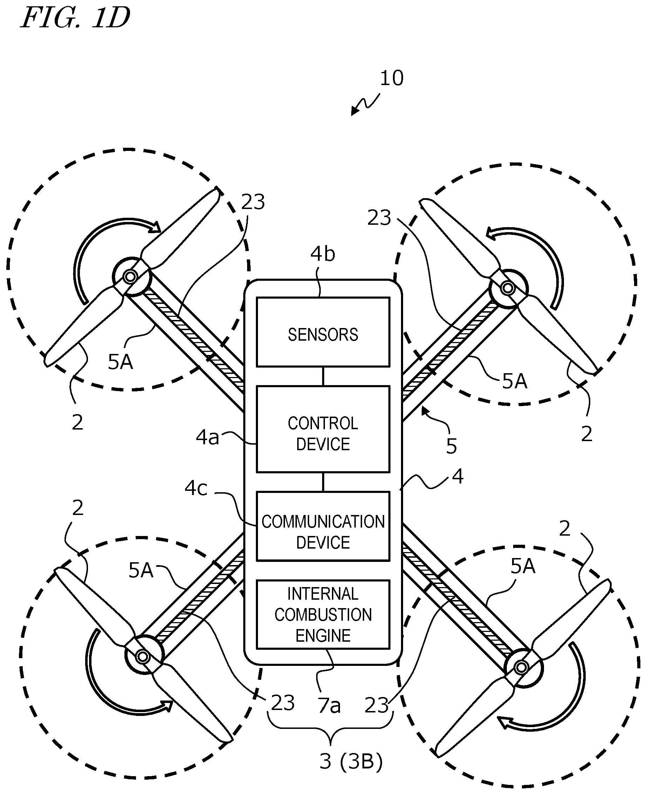

A multicopter **10** shown in FIGS. **1****B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.** The main body **4** and body frame **5** may be collectively referred to as "body **11".**

In the example of FIG. **1B****,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** configured to control the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and **2D** or **3D** LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute part or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust.

Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned further inward than sub-rotors. In other words, the rotors 2 may be positioned such that the distance from the center of the body to the rotation axis of each main rotor is shorter than the distance from the center to the rotation axis of each sub-rotor.

In this example, the rotation drive device **3** has a plurality of motors **14.** As mentioned above, the rotation drive device **3** may include the internal combustion engine **7a.**

FIG. **1D** is a plan view schematically showing a basic configuration example of a multicopter **10** equipped with the second rotation drive device **3B.** In the example shown in FIG. **1D****,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.** Rotation drive device **3B** may include a mechanism for changing the pitch angle of blades of each of the plurality of rotors **2.** In that case, the control device **4a** may adjust the lift generated by each rotor **2** by controlling that mechanism to change the blade pitch angles.

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration. Note that when the rotation drive device **3** includes a mechanism for changing the pitch angle of blades of each of the plurality of the rotors **2,** the attitude can also be adjusted by changing the pitch angle of each blade.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. When the implement **200** is equipped with space large enough to store materials, the implement **200** can also transport agricultural materials or harvested crops over a wide area. There are various forms of connecting the implement **200** to the multicopter **10.** The multicopter **10** may suspend and tow the implement **200** using a cable. The implement **200** towed by the multicopter **10** can perform ground operations while being towed during flight or hovering of multicopter **10.** The implement **200** during operation may be in the air or on the ground.

In the example shown in FIG. **1C****,** the multicopter **10** is equipped with power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power. The ESC **16** may be included in the control device **4a.**

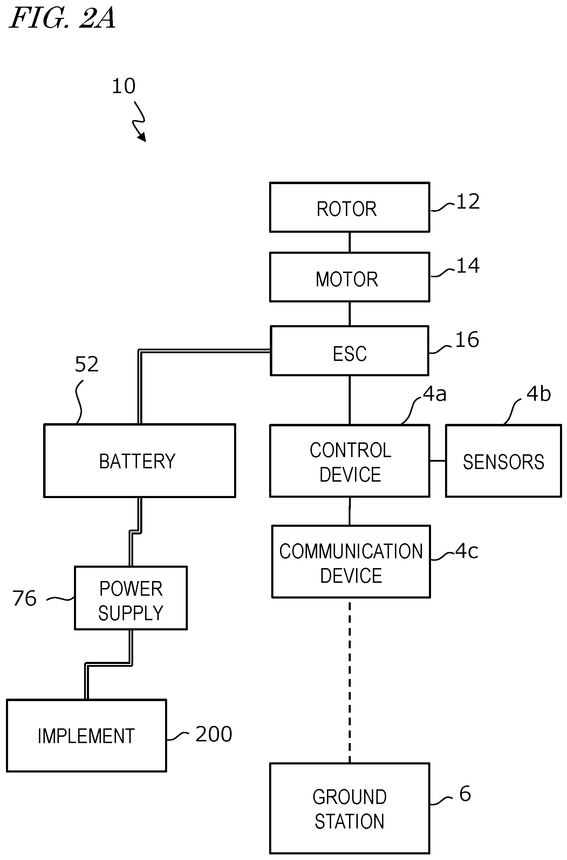

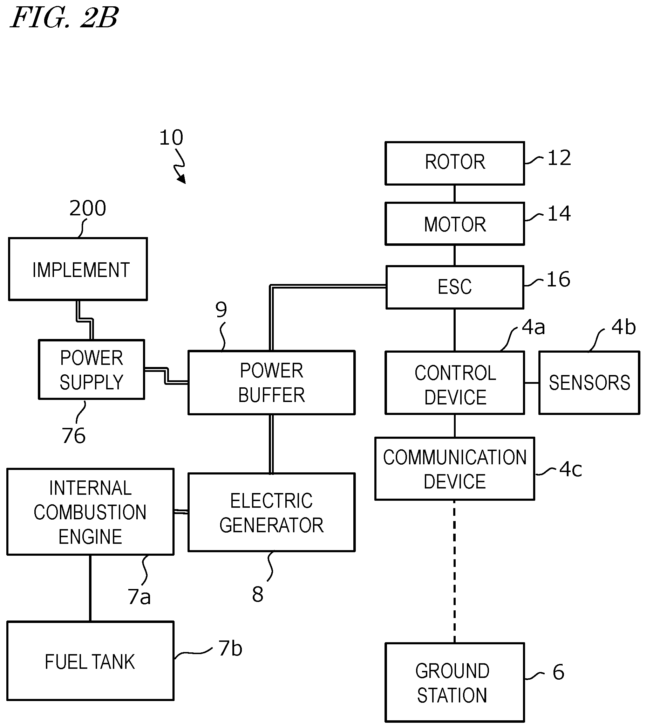

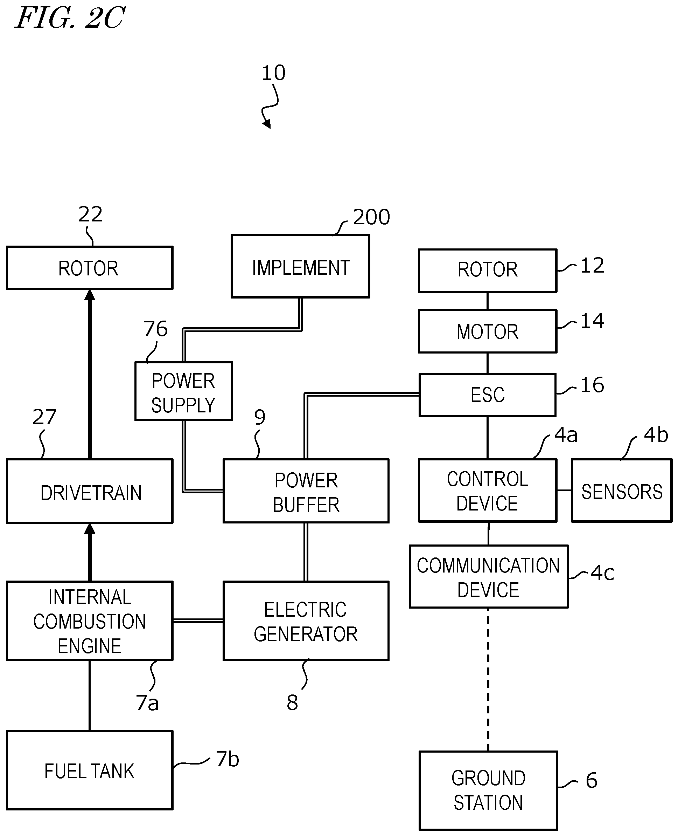

FIG. **2A** shows a block diagram of a basic configuration example of a battery-driven multicopter **10.** The battery-driven multicopter **10** includes a plurality of rotors **12,** a plurality of motors **14,** each driving a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A****,** for simplicity, the rotor **12,** the motor **14,** and the ESC **16** are each shown by a single block, but the numbers of rotors **12,** motors **14,** and ESCs **16** are each plural. This also applies to FIGS. **2B** and **2C****.**

The control device **4a** may receive control commands wirelessly from, for example, a ground station **6** on the ground through the communication device **4c.** The number of ground stations **6** is not limited to one, and the grand station 6 may be distributed across a plurality of locations. The communication device **4c** may also wirelessly receive control commands from an operator's remote controller on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200** from the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter 10 shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** each driving a respective one of the plurality of rotors **12,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits a driving force from the internal combustion engine **7a,** and the rotor **22** that rotates upon the receiving the driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

As described above, the configurations of multicopter **10** are diverse. In any configuration, the multicopter **10** may be equipped with a function to detect and avoid obstacles. Such a function is called an "obstacle avoidance function" in this specification. The following describes an example of a multicopter **10** equipped with an obstacle avoidance function.

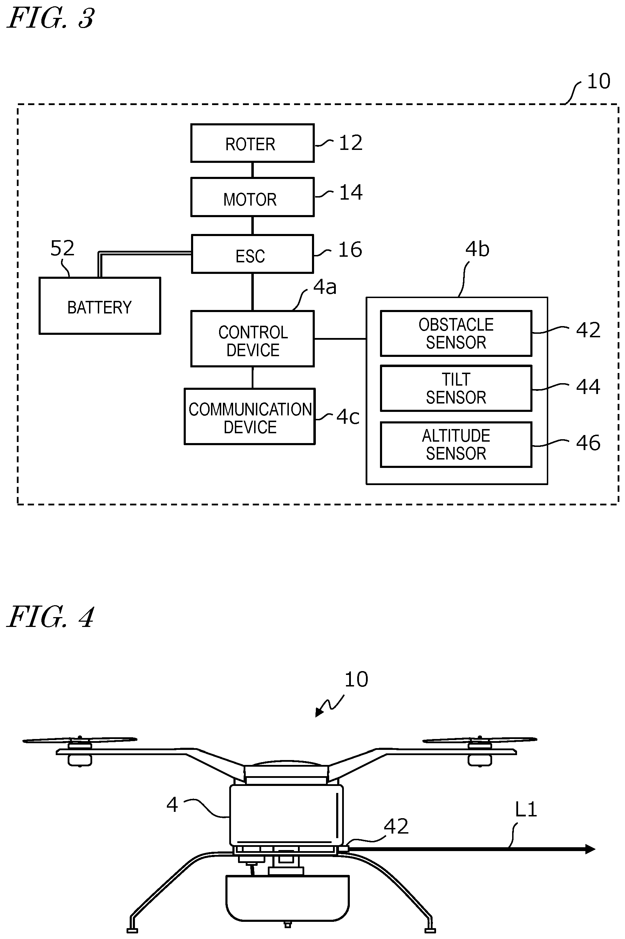

FIG. **3** is a block diagram schematically showing a configuration example of a multicopter **10** with an obstacle avoidance function. The multicopter **10** shown in FIG. **3** includes components similar to those of the multicopter **10** shown in FIG. **2A****.** However, the power supply **76** and work machine **200** shown in FIG. **2A** are omitted from FIG. **3.** FIG. **3** shows examples of sensors **4b** including an obstacle sensor **42,** a tilt sensor **44,** and an altitude sensor **46.** The operation of the multicopter **10** is controlled by a control system including the control device **4a.**

In FIG. **3****,** for simplicity, the rotor **12,** the motor **14,** and the ESC **16** are each shown by a single block, but the numbers of rotors **12,** motors **14,** and ESCs **16** are each plural. Additionally, although not shown in FIG. **3****,** the multicopter **10** may include an internal combustion engine **7a,** a fuel tank **7b,** and an electric generator **8** as shown in FIGS. **2B** or **2C****.** Furthermore, as shown in FIG. **2C****,** the multicopter may include at least one rotor **22** driven by the internal combustion engine **7a.** In that case, either the "series hybrid" or "parallel hybrid" drive format may be adopted.

The multicopter **10** is equipped with one or more obstacle sensors **42.** The obstacle sensor **42** may be, for example, a laser sensor (such as a laser range finder or LiDAR sensor), an ultrasonic sensor, or an imaging device, or any combination of these. Multiple obstacle sensors **42** may be attached to different positions on the body (main body **4** or body frame **5).** Alternatively, when a work machine **200** is connected to the body as shown in the example of FIG. **1C****,** one or more obstacle sensors **42** may be attached to the work machine **200.**

The obstacle sensor **42** may be positioned to detect objects horizontally spaced away from the body (e.g., in a direction parallel to the ground) when the body is not tilted. Here, "when the body is not tilted" refers to a state where the multicopter **10** is in a posture (hereinafter referred to as the "reference posture") where the rotation axes of each rotor are substantially parallel to the vertical direction. For example, the state where the multicopter **10** is hovering in a windless environment corresponds to a state where the body is not tilted.

When the obstacle sensor **42** includes a laser sensor, the laser sensor may be fixed to the body so as to emit a light beam toward an object horizontally positioned from the body when the body is not tilted. The laser sensor may be configured to output a signal indicating the distance or position to one or more objects within a measurable range from the position of the body or laser sensor.

When the obstacle sensor **42** includes an imaging device, the imaging device may be fixed to the body so as to capture images of objects horizontally positioned from the body when the body is not tilted. An imaging device capable of measuring distance to the subject, such as a stereo camera, may be used as the imaging device. The imaging device may be configured to output a signal indicating the captured image, or a signal including information on the distance to one or more subjects included in the captured image.

The tilt sensor **44** measures the tilt angle of the body of the multicopter **10** and outputs a signal indicating the tilt angle. The tilt angle represents the magnitude of inclination relative to the reference posture mentioned above. The tilt sensor **44** may be realized by, for example, an acceleration sensor or an IMU including an acceleration sensor.

The altitude sensor **46** measures the altitude of the body of the multicopter **10** and outputs a signal indicating the altitude. The altitude refers to the vertical distance between a reference plane (e.g., the ground surface) and the body. The altitude sensor **46** may be realized by, for example, a barometer, a GNSS receiver, or a distance sensor that measures the distance from the body to the ground, or a combination of these.

FIG. **4** is a side view schematically showing an example of a multicopter **10** equipped with an obstacle sensor **42.** The obstacle sensor **42** is attached to the main body **4** of multicopter **10** shown in FIG. **4****.** In this example, the obstacle sensor **42** is a laser sensor that emits a light beam **L1** in the horizontal direction when the body is not tilted. This obstacle sensor **42** may include a light source that emits the light beam **L1,** a photodetector that detects light returned when the light beam **L1** is reflected from the surface of an object, and a processor that calculates the distance to the reflection point. The processor may be configured to calculate the distance to the reflection point using technology such as ToF (Time of Flight) and output a signal indicating the distance. Such obstacle sensors **42** may be placed, for example, at four or more locations around the front, back, left, and right of the body of the multicopter **10.**

The control device **4a** detects obstacles based on signals output from the obstacle sensor **42.** Here, "detecting obstacles" means detecting that an obstacle exists within a range where the distance from the body or the obstacle sensor **42** is less than or equal to a threshold value. The threshold value may be, for example, 20 meters (m), 30 m, or 40 m. The threshold value may be a fixed value or a variable value. When an obstacle is detected, the control device **4a** causes the multicopter **10** to perform an obstacle avoidance operation to avoid collision with the obstacle. This function is called the "obstacle avoidance function". The obstacle avoidance operation may include actions such as invalidating commands to approach the obstacle and hovering in place, or changing the flight path to move away from the obstacle.

In this embodiment, the control device **4a** does not always enable the obstacle avoidance function but disables the obstacle avoidance function when a predetermined condition is satisfied. For example, the control device **4a** may be configured to disable the obstacle avoidance function when at least one of the following applies: (a) the tilt angle of the body is greater than a predetermined angle, (b) a takeoff operation or a landing operation (hereinafter may be collectively referred to as "takeoff or landing operation") is being performed, or (c) the altitude of the multicopter **10** is at or below a predetermined height. In other words, the predetermined condition includes at least one of the following first, second, and third conditions:
First condition: The tilt angle of the body is greater than a predetermined angle;
Second condition: The multicopter 10 is in a takeoff operation or a landing operation;
Third condition: The altitude of the body is at or below a predetermined height.

The control device **4a** disables the obstacle avoidance function when the predetermined condition including at least one of these conditions is satisfied, and enables the obstacle avoidance function when the predetermined condition is not satisfied. For example, when the tilt angle of the body exceeds the predetermined angle during a takeoff or landing operation, the control device **4a** may disable the obstacle avoidance function. In that case, the predetermined condition includes the first condition and the second condition, but not the third condition. Alternatively, when the altitude of the body is at or below the predetermined height during a takeoff or landing operation, the control device **4a** may disable the obstacle avoidance function. In that case, the predetermined condition includes the second condition and the third condition, but not the first condition. These examples are not limiting. For instance, when the tilt angle of the body exceeds the predetermined angle, and the altitude of the body is at or below the predetermined height during a takeoff or landing operation, the control device **4a** may disable the obstacle avoidance function. In that case, the predetermined condition includes all three conditions: the first condition, the second condition, and the third condition.

Such operations can avoid situations where, for example, during a takeoff or landing when the distance between the multicopter **10** and the ground is close, the body tilts and mistakenly detects the ground as an obstacle, resulting in unnecessary restriction of movement.

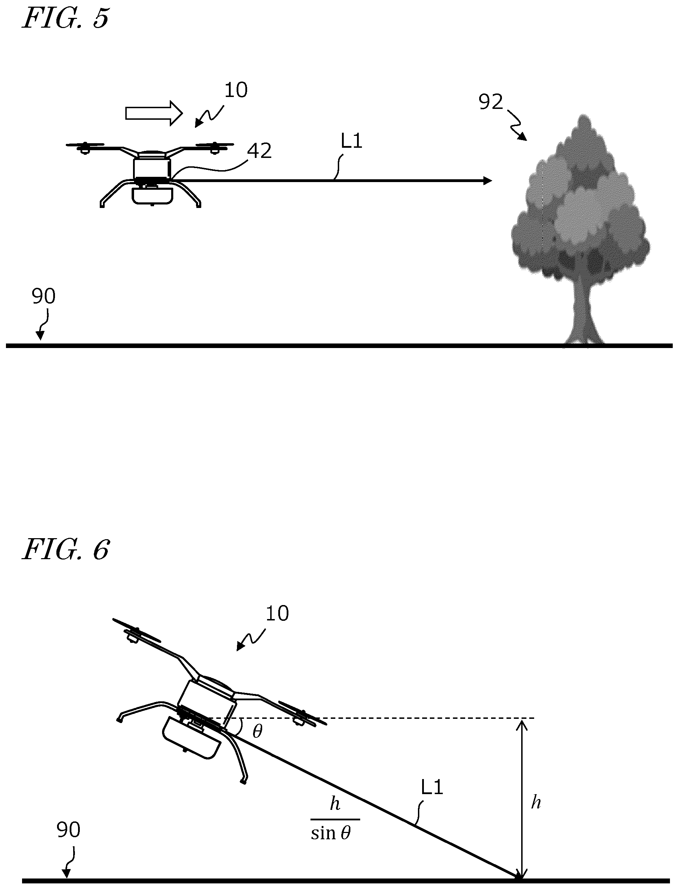

FIG. **5** is a diagram schematically showing the operation of a multicopter **10** detecting an obstacle **92** during flight. In the example of FIG. **5****,** the multicopter **10** is flying in the direction of the white arrow, and there is an obstacle **92** (in this case, a tree) in front of the multicopter **10.**

The control device **4a** can fly the multicopter **10** along a predetermined target path based on position information output from a GNSS receiver. Such an operation mode is called an "autonomous operation mode". The control device **4a** can also operate in a "manual operation mode" where it flies the multicopter **10** in response to commands from a control device used by a user. In this embodiment, the multicopter **10** may fly in either autonomous operation mode or manual operation mode.

The multicopter **10** in the example of FIG. **5** includes a laser sensor such as a LiDAR sensor as the obstacle sensor **42,** which emits a light beam **L1** toward the front of the body. This obstacle sensor **42** outputs a signal indicating the distance to objects within its measurement range. The control device **4a** detects the presence of an obstacle **92** in front of the multicopter **10** based on the signal output from the obstacle sensor **42** indicating the distance to the obstacle **92.** For example, the control device **4a** determines that an obstacle has been detected if the distance indicated by the signal (hereinafter sometimes referred to as the "measured distance") is less than a threshold value. When the control device **4a** detects the obstacle **92,** it can avoid collision with the obstacle **92** by stopping the movement of the multicopter **10** and having it hover in place, or by moving the multicopter **10** away from the obstacle **92.**

Here, when the body is tilted in a state where the altitude of the multicopter **10** is low, such as during takeoff or landing operations, as shown in FIG. **6****,** the light beam **L1** may be directed at the ground **90,** causing the ground **90** to be detected as an obstacle. If the tilt angle of the body is θ and the altitude of the body is h, the measured distance to the ground **90** is represented by h/sin θ. The tilt angle θ is measured by the tilt sensor **44,** and the altitude h is measured by the altitude sensor **46.** When the multicopter 10 is tilted around an axis extending in the left-right direction (for example, when moving forward or backward), the tilt angle θ represents the pitch angle. When the multicopter **10** is tilted around an axis extending in the front-back direction (for example, when moving left or right), the tilt angle θ represents the roll angle. The tilt angle θ correlates with the movement speed of the multicopter **10.** Therefore, the tilt sensor **44** may calculate the tilt angle θ based on the movement speed of the multicopter **10.**

If an obstacle is detected when the measured distance is smaller than the threshold value, the ground **90** is more likely to be detected as an obstacle the smaller the altitude h or the larger the tilt angle θ. However, there are cases where even if the ground **90** is detected, it does not affect the flight, such as when the multicopter **10** is performing a takeoff or landing operation. Performing obstacle avoidance operations in such cases would unnecessarily restrict the multicopter **10**'s operation.

Therefore, the control device **4a** of the present embodiment determines whether to enable the obstacle avoidance function based on the measured value of the tilt angle 8, the measured value of the altitude h, or whether it is in a takeoff or landing operation, or a combination thereof. This can prevent unnecessary restriction of the multicopter **10**'s flight by obstacle avoidance operations.

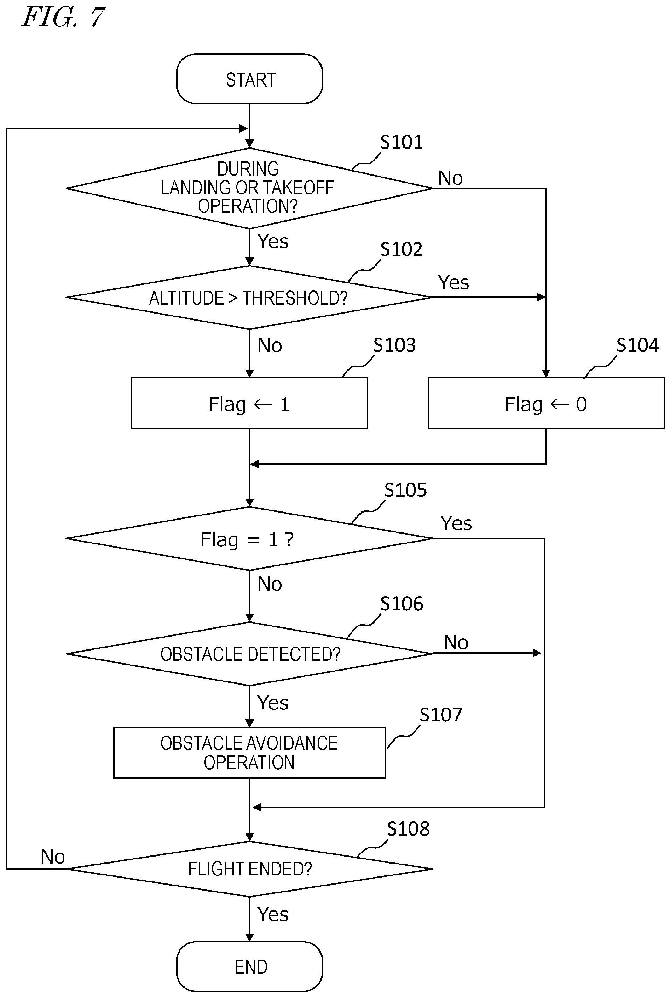

FIG. **7** is a flowchart showing an example of operations performed by the control device **4a.** In the example shown in FIG. **7****,** the control device **4a** performs the following steps **S101** to **S108** during the flight of the multicopter **10.** Note that the operations shown in FIG. **7** can be applied when the multicopter **10** flies in either autonomous operation mode or manual operation mode.

In step **S101,** the control device **4a** determines whether it is in a takeoff or landing operation. The takeoff or landing operation is an operation to take off or land the multicopter **10** according to user piloting or a pre-set flight program. In the takeoff operation, the control device **4a** raises the multicopter **10** to a specified or preset altitude (for example, 3 meters, 5 meters, 10 meters, etc.). After the takeoff operation, the control device **4a** flies the multicopter **10** according to user piloting or a pre-set flight program. In the landing operation, the control device **4a** lowers the multicopter **10** toward the ground, for example vertically, and lands it. If it is in a takeoff or landing operation in step **S101,** the process proceeds to step **S102;** if not, the process proceeds to step **S104.**

In step **S102,** the control device **4a** determines whether the altitude of the body measured by the altitude sensor **46** exceeds a threshold value. The threshold value may be set to a value lower than the altitude at which the multicopter **10** normally flies, for example, 1 meter, 2 meters, 3 meters, etc. If the measured altitude does not exceed the threshold value, the process proceeds to step **S103.** If the measured altitude exceeds the threshold value, the process proceeds to step **S104.** Note that the order of the determinations in steps **S101** and **S102** may be reversed.

In step **S103,** the control device **4a** sets a flag (Flag) indicating whether to disable the obstacle avoidance function to "1". Flag "1" indicates disabling the obstacle avoidance function. After step **S103,** the process proceeds to step **S105.**

In step **S104,** the control device **4a** sets the flag indicating whether to disable the obstacle avoidance function to "0". Flag "0" indicates enabling the obstacle avoidance function. After step **S104,** the process proceeds to step **S105.**

In step **S105,** the control device **4a** determines whether the flag is 1, that is, whether to perform obstacle avoidance operations. If the flag is 1, it proceeds to step **S108** without performing obstacle avoidance operations. If the flag is not 1 (i.e., it is 0), it proceeds to step **S106.**

In step **S106,** the control device **4a** determines whether there is an obstacle based on signals output from the obstacle sensor **42.** For example, the control device **4a** determines whether the measured distance indicated by the signal output from the obstacle sensor **42** is less than a threshold value. If the measured distance is less than the threshold value, it determines that an obstacle has been detected. If the measured distance is equal to or greater than the threshold value, it determines that no obstacle has been detected. The threshold value may be a pre-set fixed value or a variable value. For example, the control device **4a** may set the threshold value for the measured distance for obstacle detection based on the tilt angle θ measured by the tilt sensor **44** and the altitude h measured by the altitude sensor **46.** As shown in FIG. **6****,** when the obstacle sensor **42** measures the distance to a flat ground **90,** the measured distance is represented by h/sin θ. However, the ground **90** is not always flat. Also, there is a possibility that obstacles that should be avoided exist on or above the ground **90.** If the measured distance is equal to h/sin θ, it is only detecting the ground **90,** and there is no need to restrict horizontal movement. Also, if the measured distance is greater than h/sin θ, the altitude would be greater than h when moving horizontally to the point where the distance was measured, so there is no need to restrict horizontal movement. In contrast, if the measured distance is less than h/sin θ, there is an obstacle on or above the ground **90** in the forward direction of the multicopter **10,** so avoidance is necessary. Therefore, the control device **4a** may set the threshold value for the distance for obstacle detection to h/sin θ. Alternatively, the control device **4a** may vary the threshold value for the distance for obstacle detection according to the value of h/sin θ. Such threshold setting can prevent the ground from being detected as an obstacle, thereby suppressing unnecessary obstacle avoidance operations.

In step **S107,** the control device **4a** performs obstacle avoidance operations. For example, the control device **4a** adjusts the rotation speed of each rotor so that the multicopter **10** moves away from the obstacle or does not approach the obstacle any further. After step **S107,** the process proceeds to step **S108.**

In step **S108,** the control device **4a** determines whether the flight has ended. The control device **4a** may determine that the flight has ended, for example, in response to a flight end command, or after completing an autonomous flight along a pre-set flight path and completing the operation of landing at a predetermined landing point. The flight end command may be transmitted, for example, from a computer used by a pilot operating the multicopter **10** or a supervisor remotely monitoring the multicopter **10.** If the flight has ended, the control device **4a** ends its operation. If the flight has not ended, it returns to step **S101.** The above operations are repeated until it is determined that the flight has ended in step **S108.**

According to the above operations, if the multicopter **10** is in a takeoff or landing operation and the altitude of the multicopter **10** is at or below the threshold value (i.e., the predetermined height), the flag is set to "1", and the obstacle avoidance function is disabled. Conversely, if the multicopter **10** is not during a takeoff or landing operation, or if the altitude of the multicopter **10** exceeds the threshold value, the flag is set to "0", and the obstacle avoidance function is enabled. This can prevent unnecessary avoidance operations from being triggered when the ground is mistakenly detected as an obstacle due to the body tilting when the altitude of the multicopter **10** is low during a takeoff or landing operation.

In the example of FIG. **7****,** obstacle avoidance operations are disabled when the second condition (during takeoff or landing operations) and the third condition (the altitude of the body is at or below the predetermined height) among the aforementioned first, second, and third conditions is satisfied. This is not limiting. For example, obstacle avoidance operations may be disabled when the first condition (the tilt angle of the body is greater than the predetermined angle) and the second condition are satisfied. Alternatively, obstacle avoidance operations may be disabled when all of the first, second, and third conditions is satisfied.

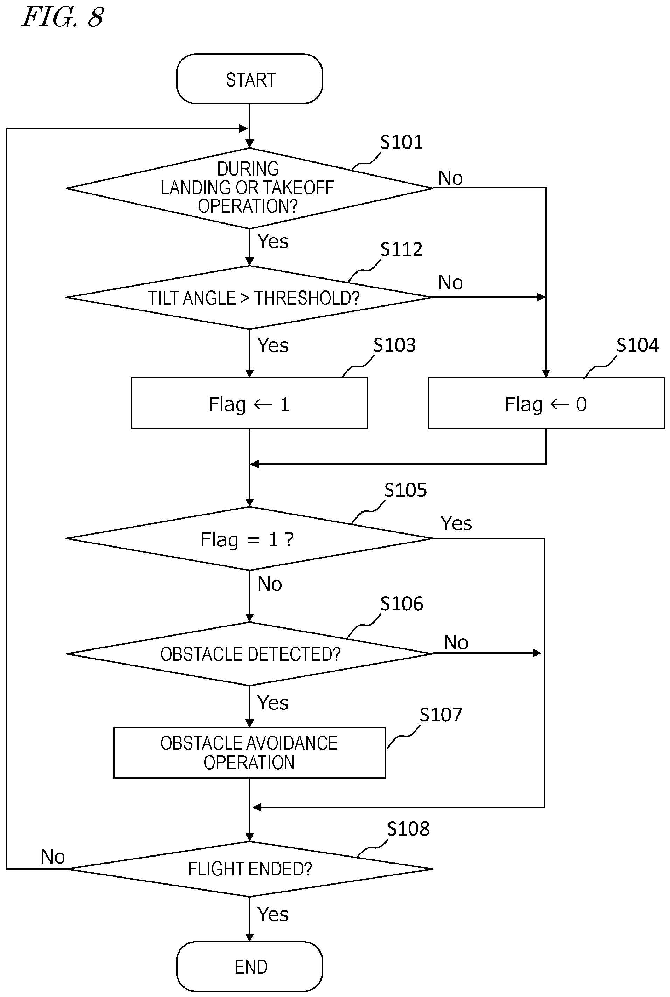

FIG. **8** is a flowchart showing an example of operations where obstacle avoidance operations are disabled when the first condition and the second condition is satisfied. The only difference between the operations shown in FIG. **8** and those shown in FIG. **7** is that step **S102** has been replaced with step **S112.** In the example of FIG. **8****,** when the control device **4a** determines that it is in a takeoff or landing operation in step **S101,** it proceeds to step **S112** and determines whether the tilt angle of the body measured by the tilt sensor **44** is greater than a threshold value (i.e., the predetermined angle). The threshold value may be set to any angle, for example, 20 degrees, 30 degrees, 40 degrees, etc. If the tilt angle is greater than the threshold value, it proceeds to step **S103;** if the tilt angle is less than or equal to the threshold value, it proceeds to step **S104.** The subsequent operations are the same as in the example of FIG. **7****.** Note that the order of the determinations in steps **S101** and **S112** may be reversed.

In the example of FIG. **8****,** obstacle avoidance operations are disabled when the multicopter **10** is in a takeoff or landing operation and the tilt angle of the body is greater than the threshold value. Otherwise, obstacle avoidance operations are enabled. Such operations can prevent unnecessary avoidance operations from being triggered when the ground is mistakenly detected as an obstacle even when the body is significantly tilted during a takeoff or landing operation.

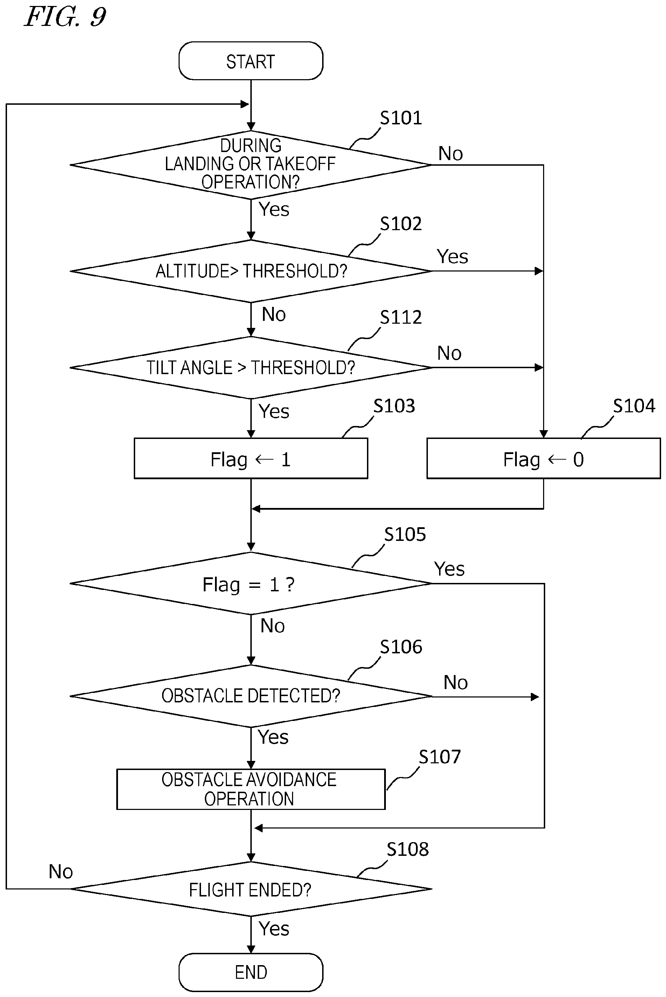

FIG. **9** is a flowchart showing an example of operations where obstacle avoidance operations are disabled when all of the first, second, and third conditions are satisfied. The only difference between the operations shown in FIG. **9** and those shown in FIG. **7** is that step **S112** has been added between steps **S102** and **S103.** Step **S112** is the same operation as step **S112** in FIG. **8****.** In the example of FIG. **9****,** when the control device **4a** determines that the altitude of the body is at or below the threshold value (predetermined height) in step **S102,** it proceeds to step **S112** and determines whether the tilt angle of the body is greater than the threshold value (predetermined angle). If the tilt angle is greater than the predetermined angle, it proceeds to step **S103;** if the tilt angle is less than or equal to the predetermined angle, it proceeds to step **S104.** The subsequent operations are the same as in the examples of FIGS. **7** and **8****.** Note that the order of the determinations in steps **S101, S102,** and **S112** may be interchanged with each other.

In the example of FIG. **9****,** obstacle avoidance operations are disabled when the multicopter **10** is in a takeoff or landing operation, the altitude of the body is at or below the predetermined height, and the tilt angle of the body is greater than the predetermined angle; otherwise, obstacle avoidance operations are enabled. Such operations can prevent unnecessary avoidance operations from being triggered when the ground is mistakenly detected as an obstacle even when the altitude of the body is low and the body is significantly tilted during a takeoff or landing operation.

In the examples of FIG. **7****,** FIG. **8****,** and FIG. **9****,** obstacle avoidance operations are disabled only when the multicopter **10** is in a takeoff or landing operation, and are not disabled when not during a takeoff or landing operation. Instead of such examples, the control device **4a** may determine whether to enable obstacle avoidance operations based on at least one of the altitude and tilt of the body, regardless of whether the multicopter **10** is in a takeoff or landing operation. For example, the control device **4a** may disable obstacle avoidance operations if the altitude of the body is at or below the predetermined height or if the tilt angle of the body is greater than the predetermined angle, regardless of whether it is in a takeoff or landing operation.

In the above examples, the "altitude" of the body refers to the height from the ground to the body, but this is not limiting. For example, when the multicopter **10** flies over crops in a field, the distance from the body to the highest part of the crops may be treated as the "altitude". In that case, the sensors **4b** of the multicopter **10** may include a distance sensor that measures the distance from the body of the multicopter **10** to the crops. Such a distance sensor may be used as the altitude sensor **46** shown in FIG. **3****.**

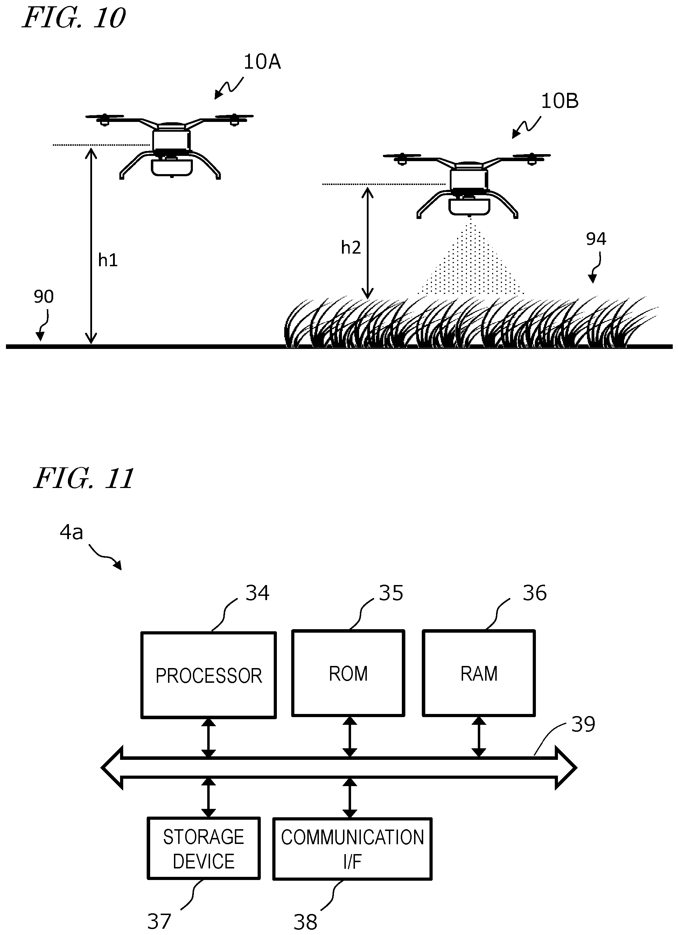

FIG. **10** is a diagram schematically showing an example of a method for determining the altitude of the body. FIG. **10** illustrates a multicopter **10A** flying above the ground **90** and a multicopter **10B** flying above crops **94** while performing agricultural work such as spraying. Multicopters **10A** and **10B** both have configurations similar to the multicopter **10** described above. In this example, the altitude sensor **46** includes a distance sensor that measures the distance to objects below the body as the altitude. Multicopter **10A** flies above the ground **90** where no crops are growing, so the altitude sensor **46** of multicopter **10A** measures the distance from the body to the ground **90** as altitude **h1.** Multicopter **10B** flies above an area where crops **94** are growing, so the altitude sensor **46** of multicopter **10B** measures the distance from the body to the top of the crops **94** as altitude **h2.** The control device **4a** of multicopter **10B** may determine whether to enable the obstacle avoidance operations based on altitude **h2** instead of altitude **h1.** In that case, even if crops **94** rather than the ground **90** are detected as obstacles, avoidance operations will not be performed. This can suppress unnecessary avoidance operations from being triggered when crops **94** are detected as obstacles when the body is tilted while flying at a height close to the crops **94.**

The control device **4a** of the embodiment of the present disclosure may be realized by a digital computer system programmed to execute each of the processes explained with reference to FIGS. **7** to **9****.**

FIG. **11** is a block diagram showing an example of the hardware configuration of the control device **4a.** The control device **4a** includes a processor **34,** ROM (Read Only Memory) **35,** RAM (Random Access Memory) **36,** storage device **37,** and communication I/F **38.** These components are interconnected via a bus **39.**

The processor **34** is one or more semiconductor integrated circuits, also referred to as a central processing unit (CPU) or microprocessor. The processor **34** sequentially executes computer programs stored in ROM **35** to implement the aforementioned processing. The processor **34** is broadly interpreted to include terms such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (for example, PROM), rewritable memory (for example, flash memory), or read-only memory. The ROM **35** stores programs that control the operation of the processor. The ROM **35** need not be a single recording medium but may be a collection of a plurality of recording media. Part of the plurality of collections may be removable memory.

The RAM **36** provides a work area for temporarily expanding programs stored in the ROM **35** during boot-up. The RAM **36** need not be a single recording medium but may be a collection of a plurality of recording media.

The communication I/F **38** is an interface for communication between the control device **4a** and other electronic components or electronic control units (ECUs). For example, the communication I/F **38** may perform wired communication complying with various protocols. The communication I/F **38** may perform wireless communication complying with Bluetooth^{®} standards and/or Wi-Fi^{®} standards. Both standards include wireless communication standards utilizing the 2.4 GHz frequency band.

The storage device **37** may be, for example, a semiconductor memory, magnetic storage device, or optical storage device, or a combination thereof. The storage device **37** is configured to store, for example, map data useful for autonomous flight of the multicopter **10,** and various sensor data acquired by the multicopter **10** during flight.

Note that, as mentioned earlier, the control device **4a** may include, as separate components, a flight control device such as a flight controller and an upper-level computer (companion computer). The companion computer may execute each of the processes shown in FIGS. **7** to **9** and provide flight-related commands to the flight controller based on the results of those processes.

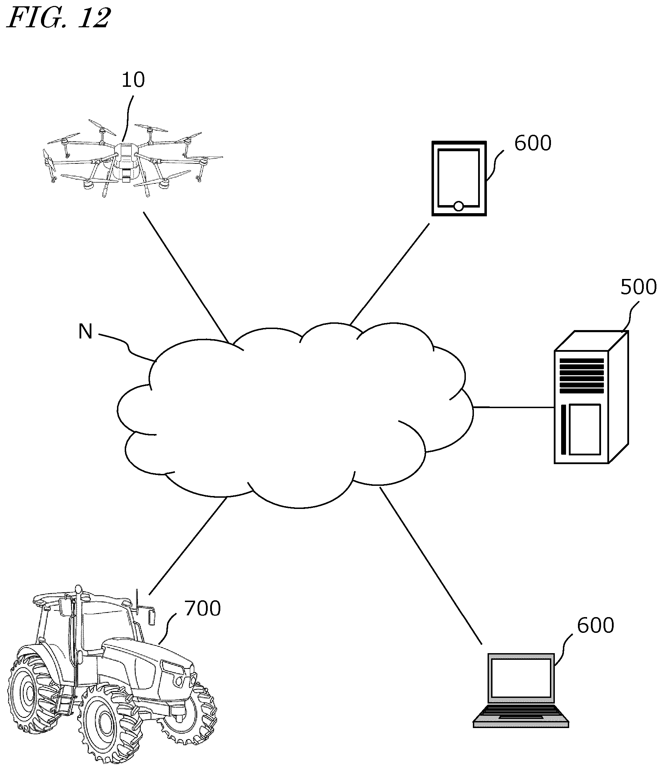

FIG. **12** is a schematic diagram showing a configuration example of a system including the multicopter **10.** Part or all of the functions of the control device **4a** may be realized by one or more servers (computers) **500** or terminal devices (including portable and fixed types) **600** connected to the communication device **4c** of the multicopter **10** via a communication network **N**. Agricultural machines **700** such as tractors may be connected to this communication network **N,** and communication may be performed between the multicopter **10** and the agricultural machines **700.** Through the communication network **N,** part of the data used for processing by the control device **4a** and control signals for the multicopter **10** may be provided to the multicopter **10** from the agricultural machines **700.**

This specification discloses the solutions described in the following items.

[Item 1] An unmanned aerial vehicle comprising:
a body;
an obstacle sensor attached to the body; and
a control device having an obstacle avoidance function to detect an obstacle based on a signal output from the obstacle sensor and to perform an operation to avoid collision with the obstacle, the control device being configured to:
   disable the obstacle avoidance function when a predetermined condition is satisfied; and
   enable the obstacle avoidance function when the predetermined condition is not satisfied,
   wherein the predetermined condition includes at least one of:
      a first condition that a tilt angle of the body is greater than a predetermined angle;
      a second condition that the unmanned aerial vehicle is in a takeoff operation or a landing operation; or
      a third condition that an altitude of the body is at or below a predetermined height.

[Item 2] The unmanned aerial vehicle according to Item 1, wherein the predetermined condition includes the first condition and the second condition, and does not include the third condition.

[Item 3] The unmanned aerial vehicle according to Item 1, wherein the predetermined condition includes the second condition and the third condition, and does not include the first condition.

[Item 4] The unmanned aerial vehicle according to Item 1, wherein the predetermined condition includes all of the first, second, and third conditions.

[Item 5] The unmanned aerial vehicle according to any one of Items 1 to 4, wherein the obstacle sensor is positioned to detect an object located horizontally away from the body when the body is not tilted.

[Item 6] The unmanned aerial vehicle according to any one of Items 1 to 5, wherein
the obstacle sensor includes a laser sensor, and
the laser sensor is fixed to the body so as to emit a light beam toward an object located horizontally away from the body when the body is not tilted.

[Item 7] The unmanned aerial vehicle according to any one of Items 1 to 5, wherein
the obstacle sensor includes an imaging device, and
the imaging device is fixed to the body so as to capture an image of an object located horizontally away from the body when the body is not tilted.

[Item 8] The unmanned aerial vehicle according to any one of Items 1 to 7, wherein
the obstacle sensor is configured to output a signal indicating a distance to an object within a measurement range, and
the control device is configured to:
   determine that an obstacle has been detected if the distance indicated by the signal is less than a threshold value; and
   set the threshold value based on the tilt angle and the altitude.

[Item 9] The unmanned aerial vehicle according to Item 8, wherein
when the tilt angle is θ and the altitude is h,
the control device is configured to vary the threshold value according to the value of h/sin θ.

[Item 10] The unmanned aerial vehicle according to any one of Items 1 to 9, further comprising a distance sensor configured to measure a distance to an object existing below the body as the altitude.

[Item 11] A control system for an unmanned aerial vehicle including a body and an obstacle sensor attached to the body, the control system comprising:
a control device configured to control operation of the unmanned aerial vehicle, wherein
the control device has an obstacle avoidance function to detect an obstacle based on a signal output from the obstacle sensor and to perform an operation to avoid collision with the obstacle,
the control device is configured to:
   disable the obstacle avoidance function when a predetermined condition is satisfied; and
   enable the obstacle avoidance function when the predetermined condition is not satisfied, and
the predetermined condition includes at least one of:
   a first condition that a tilt angle of the body is greater than a predetermined angle;
   a second condition that the unmanned aerial vehicle is in a takeoff operation or a landing operation; or
   a third condition that an altitude of the body is at or below a predetermined height.

[Item 12] A control method for an unmanned aerial vehicle including a body and an obstacle sensor attached to the body, the method comprising:
detecting an obstacle based on a signal output from the obstacle sensor;
causing the unmanned aerial vehicle to perform an obstacle avoidance operation to avoid collision with the obstacle when an obstacle is detected;
disabling the obstacle avoidance operation when a predetermined condition is satisfied; and
enabling the obstacle avoidance operation when the predetermined condition is not satisfied,
wherein the predetermined condition includes at least one of:
   a first condition that a tilt angle of the body is greater than a predetermined angle;
   a second condition that the unmanned aerial vehicle is in a takeoff operation or a landing operation; or
   a third condition that an altitude of the body is at or below a predetermined height.

### INDUSTRIAL APPLICABILITY

The unmanned aerial vehicles according to the present disclosure may be widely utilized not only for applications such as aerial photography, surveying, logistics, and agricultural spraying, but also for ground work related to agricultural work, and transportation of harvested crops and agricultural materials.

### REFERENCE SIGNS LIST

**2...** rotor (propeller), **3...** rotation drive device, **4...** main body, **4a...** control device, **4b...** sensors, **4c...** communication device, **5...** body frame, **10...** multicopter, **12...** sub-rotor, **14...** motor, **16...** ESC, **22...** main rotor, **42...** obstacle sensor, **44...** tilt sensor, **46...** altitude sensor, **52...** battery

## Claims

1. An unmanned aerial vehicle comprising:
a body;
an obstacle sensor attached to the body; and
a control device having an obstacle avoidance function to detect an obstacle based on a signal output from the obstacle sensor and to perform an operation to avoid collision with the obstacle, the control device being configured to:
disable the obstacle avoidance function when a predetermined condition is satisfied; and
enable the obstacle avoidance function when the predetermined condition is not satisfied,
wherein the predetermined condition includes at least one of:
a first condition that a tilt angle of the body is greater than a predetermined angle;
a second condition that the unmanned aerial vehicle is in a takeoff operation or a landing operation; or
a third condition that an altitude of the body is at or below a predetermined height.

2. The unmanned aerial vehicle according to Claim 1, wherein the predetermined condition includes the first condition and the second condition, and does not include the third condition.

3. The unmanned aerial vehicle according to Claim 1, wherein the predetermined condition includes the second condition and the third condition, and does not include the first condition.

4. The unmanned aerial vehicle according to Claim 1, wherein the predetermined condition includes all of the first, second, and third conditions.

5. The unmanned aerial vehicle according to any one of Claims 1 to 4, wherein the obstacle sensor is positioned to detect an object located horizontally away from the body when the body is not tilted.

6. The unmanned aerial vehicle according to any one of Claims 1 to 5, wherein
the obstacle sensor includes a laser sensor, and
the laser sensor is fixed to the body so as to emit a light beam toward an object located horizontally away from the body when the body is not tilted.

7. The unmanned aerial vehicle according to any one of Claims 1 to 5, wherein
the obstacle sensor includes an imaging device, and
the imaging device is fixed to the body so as to capture an image of an object located horizontally away from the body when the body is not tilted.

8. The unmanned aerial vehicle according to any one of Claims 1 to 7, wherein
the obstacle sensor is configured to output a signal indicating a distance to an object within a measurement range, and
the control device is configured to:
determine that an obstacle has been detected if the distance indicated by the signal is less than a threshold value; and
set the threshold value based on the tilt angle and the altitude.

9. The unmanned aerial vehicle according to Claim 8, wherein
when the tilt angle is θ and the altitude is h,
the control device is configured to vary the threshold value according to the value of h/sin θ.

10. The unmanned aerial vehicle according to any one of Claims 1 to 9, further comprising a distance sensor configured to measure a distance to an object existing below the body as the altitude.

11. A control system for an unmanned aerial vehicle including a body and an obstacle sensor attached to the body, the control system comprising:
a control device configured to control operation of the unmanned aerial vehicle, wherein
the control device has an obstacle avoidance function to detect an obstacle based on a signal output from the obstacle sensor and to perform an operation to avoid collision with the obstacle,
the control device is configured to:
disable the obstacle avoidance function when a predetermined condition is satisfied; and
enable the obstacle avoidance function when the predetermined condition is not satisfied, and
the predetermined condition includes at least one of:
a first condition that a tilt angle of the body is greater than a predetermined angle;
a second condition that the unmanned aerial vehicle is in a takeoff operation or a landing operation; or
a third condition that an altitude of the body is at or below a predetermined height.

12. A control method for an unmanned aerial vehicle including a body and an obstacle sensor attached to the body, the method comprising:
detecting an obstacle based on a signal output from the obstacle sensor;
causing the unmanned aerial vehicle to perform an obstacle avoidance operation to avoid collision with the obstacle when an obstacle is detected;
disabling the obstacle avoidance operation when a predetermined condition is satisfied; and
enabling the obstacle avoidance operation when the predetermined condition is not satisfied, wherein
the predetermined condition includes at least one of:
a first condition that a tilt angle of the body is greater than a predetermined angle;
a second condition that the unmanned aerial vehicle is in a takeoff operation or a landing operation; or
a third condition that an altitude of the body is at or below a predetermined height.
